Europäisches Patentamt

**European Patent Office**

**Office européen des brevets**

(11) Veröffentlichungsnummer: **0 157 730**
A2

# (12) EUROPÄISCHE PATENTANMELDUNG

(21) Anmeldenummer: 85730048.7

(22) Anmeldetag: 29.03.85

(51) Int. Cl.⁴: **G 01 K 7/00**

(30) Priorität: 04.04.84 DE 3413046

(43) Veröffentlichungstag der Anmeldung: 09.10.85
Patentblatt 85/41

(84) Benannte Vertragsstaaten: **CH DE FR GB IT LI**

(71) Anmelder: **Universal-Kugellager-Fabrik GmbH,
Fritschestrasse 27-28, D-1000 Berlin 10 (DE)**

(72) Erfinder: **Dietrich, Elmar, Kantstrasse 83,
D-1000 Berlin 12 (DE)**
Erfinder: **Thelen, Wolfgang, Prof., Alemannenstrasse 13,
D-1000 Berlin 28 (DE)**

(74) Vertreter: **Böning, Manfred, Dr. Ing. et al, Patentanwälte
Dipl.-Ing. Dieter Jander Dr. Ing. Manfred Böning
Kurfürstendamm 66, D-1000 Berlin 15 (DE)**

(54) **Messeinrichtung.**

(57) Bei einer Messeinrichtung zum Erfassen von auf ein Wälzlager einwirkenden Kräften mit Hilfe eines aus zwei sandwichartig übereinanderliegenden Schichten (2, 3) bestehenden bimorphen Piezoelementes (1) dient das Piezoelement (1) zusätzlich zur Temperaturmessung. Bei der Temperaturmessung wird der Umstand genutzt, dass die Kapazität des Piezoelementes (1) von der Temperatur abhängt. Um die jeweilige Temperatur ermitteln zu können, wird das Piezoelement (1) mit einer konstanten Spannung aufgeladen und anschliessend erfolgt eine Ermittlung seiner temperaturabhängigen Ladezeitkonstante.

0157730

Meßeinrichtung

Die Erfindung betrifft eine Meßeinrichtung zum Erfassen von auf ein Wälzlager einwirkenden Kräften mit einem Sensor, der von einem aus zwei sandwichartig übereinanderliegenden Schichten bestehenden bimorphen Piezoelement mit Mittelelektrode gebildet wird.

Bekannt ist eine Meßeinrichtung der vorstehenden Art, mit der sich lediglich Kräfte messen lassen. Der Erfindung liegt die Aufgabe zugrunde, die bekannte Meßeinrichtung dahingehend weiterzuentwickeln, daß sie auch unter Ausnutzung ein und desselben Sensors Temperaturmessungen ermöglicht. Diese Aufgabe wird erfindungsgemäß dadurch gelöst, daß das Piezoelement zur Temperaturmessung genutzt wird, indem nach Aufladung mit einer konstanten Spannung seine temperaturabhängige Ladezeitkonstante ermittelt wird.

Die erfindungsgemässe Meßeinrichtung bietet den Vorteil grosser Einfachheit und enthebt ihren Benutzer der Notwendigkeit wesentlicher konstruktiver Änderungen im Bereich der das Wälzlager umfassenden Lagerung.

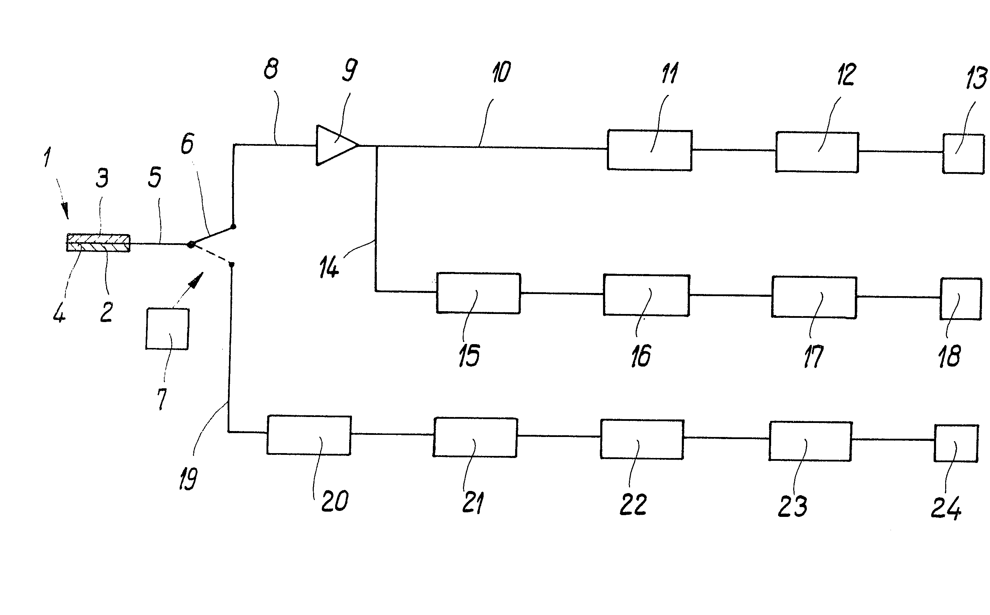

Die Erfindung wird im folgenden anhand der beigefügten Zeichnung näher erläutert.

In der Zeichnung ist 1 ein bimorphes Piezoelement, welches aus zwei sandwichartig übereinanderliegenden Schichten 2 und 3 besteht. An der Berührungsstelle zwischen den Schichten ist eine Mittelelektrode 4 angeordnet, die über einen Leiter 5 mit einem Schalter 6 in Verbindung steht. Der Masseleiter des Piezoele-mentes wurde nicht dargestellt.

0157730

Durch einen Zeittaktgeber 7 wird der Schalter 6 in bestimmten Zeitintervallen aus der durch eine Voll-Linie dargestellten Position in die durch eine gestrichelte Linie dargestellte Position überführt.

In der gezeigten Schaltstellung gelangt das Signal des Piezoelementes über die Leitung 5, den Schalter 6 und die Leitung 8 zu einem Ladungsverstärker 9. Das Ausgangssignal des Ladungsverstärkers wird vorzugsweise über einen Buffer und die Leitung 10 zu einem Mittelwertbildner 11 geleitet, der im Prinzip aus einem aktiven Gleichrichter und einem Integrator besteht. 12 ist ein konventioneller Analog-Digital-Wandler, von dem das Signal zu einem Anzeigegerät 13 für die Kraftanzeige gelangt.

Das vom Ladungsverstärker 9 kommende Signal wird über eine Zweigleitung 14 außerdem zu einem Schwellwertschalter 15 geführt. Es gelangt von dort zu einem Frequenzspannungsumwandler 16, dessen Signal wiederum zu einem Analog-Digital-Wandler 17 geführt wird, der mit einem Anzeigegerät 18 für eine Drehzahlanzeige verbunden ist.

Zur Temperaturmessung wird der Schalter 6 in die durch die gestrichelte Linie angedeutete Lage überführt. Das Signal gelangt dabei über die Leitung 19 zu einem Multivibrator 20. Dem Multivibrator 20 ist ein Schwellwertschalter 21 nachgeschaltet, von dem aus die Signale zu einem Frequenzspannungsumwandler 22 gelangen. Im Analog-Digital-Wandler 23 erfolgt eine Umsetzung der analogen in digitale Signale. Die digitalen Signale werden auch in diesem Fall wiederum einem Anzeigegerät 24 mit Digitaldisplay zugeleitet.

Bei der beschriebenen Meßeinrichtung verwendet man mit anderen Worten zur Kraftmessung die Amplitude der durch den Wälzkörperumlauf gegebenen auf das Piezoelement 1 übertragenen Dehnungen. Zur Bestimmung der Drehzahl dient die Umlauffrequenz der Wälzkörper. Die Temperaturmessung erfolgt mit Hilfe des Multivibrators, dessen Ausgangsfrequenz von der Kapazität des Piezoelementes und somit von dessen Temperatur abhängt.

- 4 -

0157730

Patentansprüche :

1. Meßeinrichtung zum Erfassen von auf ein Wälzlager einwirkenden Kräften mit einem Sensor, der von einem aus zwei sandwichartig übereinanderliegenden Schichten (2,3) bestehenden bimorphen Piezoelement (1) mit Mittelelektrode (4) gebildet wird, dadurch gekennzeichnet, daß das Piezoelement (1) zur Temperaturmessung genutzt wird, indem nach Aufladung mit einer konstanten Spannung seine temperaturabhängige Ladezeitkonstante ermittelt wird.

2. Einrichtung nach Anspruch 1, dadurch gekennzeichnet, daß sie einen zur Kraftmessung dienenden Meßteil (9,11,12,13) und einen zur Temperaturmessung dienenden Meßteil (20,21,22,23,24) aufweist und das Piezoelement (1) durch einen Zeittaktgeber (7) abwechselnd mit dem einen und dem anderen Meßteil verbindbar ist.

3. Einrichtung nach Anspruch 1 oder 2, dadurch gekennzeichnet, daß das Piezoelement (1) die frequenzbestimmende Kapazität eines Multivibrators (20) ihres zur Temperaturmessung dienenden Teils (20, 21,22,23,24) bildet.

4. Einrichtung nach einem der Ansprüche 1 bis 3, dadurch gekennzeichnet, daß die größte Querschnittserstreckung des Piezoelementes (1) kleiner ist als der Durchmesser der Wälzkörper.

5. Einrichtung nach einem der Ansprüche 1 bis 4, dadurch gekennzeichnet, daß sie einen zur Drehzahlmessung dienenden Meßteil (15,16,17,18) aufweist und das Piezoelement (1) auch den Sensor für diesen Meßteil bildet.

0157730

13 12 11 10 9 8 6 5 3 1

18 17 16 15 14 7 2 4

24 23 22 21 20 19